# EUROPÄISCHE PATENTANMELDUNG

(11) **EP 0 680 238 A2**
(43) Veröffentlichungstag der Anmeldung: **02.11.1995**
(21) Anmeldenummer: 95105211.7
(22) Anmeldetag: 06.04.1995
(51) Int. Cl.: H04Q 11/04, H04Q 3/545

(54) **Programmgesteuerte Einrichtung insbesondere Breitband-ISDN-Kommunikationseinrichtung mit mindestens einem in dieser ablaufenden Vermittlungstechnischen Prozess**

(30) Priorität: 29.04.1994 DE 4415172
(71) Anmelder: SIEMENS AKTIENGESELLSCHAFT, D-80333 München (DE)
(72) Erfinder: Totzke, Jürgen, Dipl.-Ing., D-85586 Poing (DE)

(57) **Zusammenfassung**

Dieser nach dem Prinzip objektorientierter Programmierung ablaufende vermittlungstechnische Prozeß weist eine Mehrzahl von objektbezogenen Strukturelementen zur Implementierung unterschiedlicher vermittlungstechnischer Funktionen auf. Von diesen Strukturelementen werden jeweils für die Realisierung festgelegter vermittlungstechnischer Funktionen Objekte instanziiert, die durch Methodenaufrufe miteinander kommunizieren. Dabei ist vorgesehen, daß die nach dem OSI-7-Schichtenmodell festgelegte Vermittlungsschicht (ASC, LAC, CSC, TRC) für die Teilnehmersignalisierung in eine Anzahl von Unterschichten unterteilt ist. Jede dieser Unterschichten ist durch eine mindestens ein Strukturelement aufweisende Strukturelemente-Hierarchie realisiert. In jedem Strukturelement der jeweiligen Strukturelemente-Hierarchie ist die für die Teilnehmersignalisierung festgelegte rufende und gerufene Teilnehmerseite durch wenigstens ein gesondertes Objekt repräsentiert. Objekte ein und derselben Teilnehmerseite kommunizieren dabei über quasi-asynchrone Methodenaufrufe, während Objekte der jeweiligen Unterschicht unterschiedlicher Teilnehmerseiten über asynchrone interne Anreize direkt miteinander kommunizieren.

## Beschreibung

Die Erfindung betrifft eine programmgesteuerte Einrichtung, insbesondere Breitband-ISDN-Kommunikationseinrichtung, gemäß Oberbegriff des Patentanspruches 1. Eine derartige programmgesteuerte Einrichtung ist bereits bekannt (WO 93/20 509). In dieser bekannten Einrichtung ist ein nach Prinzipien objektorientierter Programmierung erstellter Programmodul zur Behandlung von Wählverbindungen vorgesehen. Nach dem Prinzip der objektorientierten Programmierung sind in diesem Programmodul Klassen, im folgenden auch als Strukturelemente bezeichnet, definiert, von denen für die Abwicklung festgelegter vermittlungstechnischer Funktionen Objekte instanziiert werden können. Diese Objekte stellen nach außen hin ein abgeschlossenes Gebilde dar und bestehen aus einer Einheit von Daten und Programmprozeduren, die auch als Methoden bezeichnet sind.

Allgemeine Informationen bezuglich der objektorientierten Programmierung und deren Regeln sind z.B. aus Meyer, B.: "Object Oriented Software Construction", Prentice Hall, Englewood Cliffs, New York, 1988, oder aus Fraunheim, B. et al: "Objektorientierte Programmierung" (C++-Programmierkurs, Teil I bis Teil IV, Elektronik 1990, Hefte 22 bis 25) zu entnehmen.

Bei der aus WO 93/20 509 bekannten programmgesteuerten Einrichtung kommunizieren die dem vermittlungstechnischen Programmodul zugehörigen Objekte untereinander über Methodenaufrufe. Die Objekte bilden dabei logisch eine Rufkette. Die Aufrufreihenfolge ist dabei streng sequentiell. Ein asynchron zugestellter, externer Anreiz (z.B. ein Rufsignal) muß die gesamte Rufkette durchlaufen, bis das terminierende Objekt erreicht wird. Systemreaktionen auf diesen externen Anreiz durchlaufen die gesamte Rufkette in umgekehrter Reihenfolge.

Dies stellt eine, in bezug auf die Objektorientierung nicht optimale Lösung dar, da einige Objekte dabei Methoden ausführen ohne Auswirkung auf die in ihnen enthaltenen Daten, nur um die Rufkette nicht zu unterbrechen.

Es ist nun Aufgabe der vorliegenden Erfindung, einen Weg zu zeigen, wie eine programmgesteuerte Einrichtung gemäß Oberbegriff des Patentanspruches 1 ausgebildet werden kann, um die Anzahl von Methodenaufrufen für ein externes Signal zu reduzieren.

Gelöst wird diese Aufgabe bei einer programmgesteuerten Einrichtung gemäß Oberbegriff des Patentanspruches 1 durch die in diesem Patentanspruch angegebenen Merkmale. Die Erfindung bringt dabei den Vorteil mit sich, daß einerseits die Komplexität der einzelnen Strukturelemente innerhalb des vermittlungstechnischen Prozesses reduziert wird und andererseits sich der Durchsatz der programmgesteuerten Einrichtung erhöht, was insbesondere wesentlich für eine Breitband-ISDN-Kommunikationseinrichtung ist.

Zweckmäßige Ausgestaltungen der programmgesteuerten Einrichtung gemäß der vorliegenden Erfindung ergeben sich aus den Patentansprüchen 2 bis 6.

Im folgenden wird nun die vorliegende Erfindung anhand von Zeichnungen beispielsweise näher erläutert.
- FIG 1: zeigt die Klassenstruktur eines vermittlungstechnischen Prozesses,
- FIG 2: zeigt die Unterteilung der innerhalb des vermittlungstechnischen Prozesses vorgesehenen Vermittlungsschicht und
- FIG 3 und 4: zeigen jeweils ein Ausführungsbeispiel für die Kommunikation von Objekten des vermittlungstechnischen Prozesses, auf welche im folgenden noch näher eingegangen wird.

Im folgenden wird als Beispiel für eine programmgesteuerte Einrichtung auf eine Breitband-ISDN-Kommunikationseinrichtung eingegangen, in welcher wenigstens ein vermittlungstechnischer Prozeß ablauffähig ist, um einerseits in dieser Kommunikationseinrichtung die im Zuge des Aufbaus und Abbaus von Wählverbindungen erforderlichen Steuerungsvorgänge zu steuern und andererseits von der Kommunikationseinrichtung her die für solche Wählverbindungen festgelegten Teilnehmersignalisierungsprotokolle zu realisieren. Derartige Teilnehmersignalisierungsprotokolle sind beispielsweise für ATM-Verbindungen ("Asynchronous Transfer Mode") durch die ITU-T-Empfehlung Q.2931 bzw. durch "ATM Forum UNI Spezifikation, Version 3, Kapitel 5, UNI Signalling" für die Vermittlungsschicht (Layer 3) nach dem OSI-7-Schichtenmodell festgelegt.

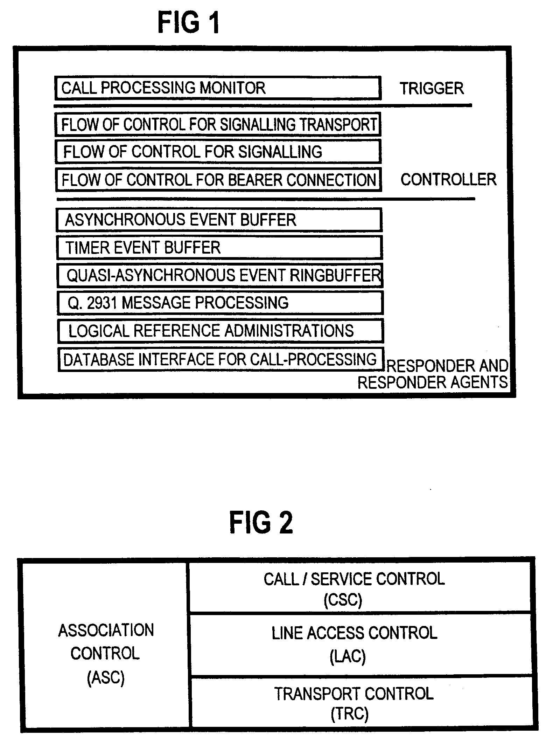

In FIG 1 ist in schematischer Form die Klassenstruktur des im folgenden zu beschreibenden vermittlungstechnischen Prozesses dargestellt. Wie bereits in der europäischen Patentanmeldung EP 0 589 249 A2 beschrieben ist, kann ein Programmodul, hier ein vermittlungstechnischer Programmodul, hinsichtlich der darin vorgesehenen Objekte in vier Schichten unterteilt werden. Die vier Schichten werden mit Trigger-, Controller-, Responder-Agent- und Responder-Schicht bezeichnet. Die Trigger-Schicht bildet die Schnittstelle des Programmoduls zu dem Betriebssystem und setzt externe Anreize in intern verarbeitbare Informationen um. Die Controller-Schicht enthält die vermittlungstechnische Steuerlogik, während in der Responder-Agent- und in der Responder-Schicht die Datenhaltung sämtlicher, für den Ablauf des Programmoduls erforderlicher Daten vorgenommen wird. Dabei können beispielsweise, wie in der genannten europäischen Patentanmeldung angegeben, zulässige Kommunikationsbeziehungen zwischen einzelnen Objekten festgelegt werden.

Der in der Trigger-Schicht angegebene Ruf-Behandlungsmonitor ("Call Processing Monitor") empfängt asynchrone externe Ereignisinformationen und Informationen bezüglich des Ablaufs von Zeitgliedern, auf welche innerhalb des vermittlungstechnischen Prozesses zu reagieren ist. Externe Ereignisinformationen werden für die weitere Bearbeitung innerhalb der Responder-Agent- und Responder-Schicht in einem für die Speicherung von asynchronen Ereignissen dienenden Puffer ("Asynchronous Event Buffer") gespeichert. Dagegen werden Informationen bezüglich des Ablaufs von Zeitgliedern in einem Zeitereignis-Puffer ("Timer Event Buffer") abgelegt. Externe Ereignisinformationen sind dabei entweder Zustandsänderungsanzeige der Übertragungsschicht (Layer 2) oder Signalisierungsnachrichten (Q.2931-Messages) vom jeweiligen Teilnehmer gemäß dem oben genannten OSI-7-Schichtenmodell. Die Signalisierungsnachrichten werden dabei von einer mit "Q.2931-Message Processing" bezeichneten Klasse weiter bearbeitet. Der genannte Ruf-Behandlungsmonitor wandelt dabei die jeweilige externe Ereignisinformation in einen internen Ereigniscode um und übergibt diesen der entsprechenden Steuerung ("Controller"). Dazu müssen in diesem Ereigniscode enthaltene logische Referenzen mit Hilfe einer logischen Referenzverwaltung ("Logical Reference Administrations") der Responder-Agents- und Responder-Schicht in die Speicheradressen der für die Bearbeitung in Frage kommenden Objekte umgewertet werden. Um für einen Verbindungsaufbau Systemressourcen belegen zu können, wird eine Datenbasisschnittstelle für die Rufbehandlung ("Database Interface for Call-Processing") innerhalb der Responder-Agents- und Responder-Schicht für den Zugriff auf die Datenbasis der Kommunikationseinrichtung benötigt.

In FIG 1 sind in der Controller-Schicht eine Steuerungslogik für die Signalisierung ("Flow of Control for Signalling"), eine Steuerungslogik für die Übertragungsschicht ("Flow of Control for Signalling Transport") sowie eine Steuerungslogik für eine Nutzverbindung ("Flow of Control for Bearer Connection") angegeben, wobei letztere für die Schaltung einer Nutzverbindung verwendet wird und die Ansteuerung der peripheren Einheiten (Leitungsanschlußeinheiten) der Kommunikationseinrichtung steuert. Im folgenden wird dabei lediglich auf die Steuerungslogik für die Signalisierung und für die Übertragungsschicht näher eingegangen.

Nach FIG 2 wird die durch die Steuerungslogik für die Signalisierung und für die Übertragungsschicht gebildete Vermittlungsschicht in drei Unterschichten unterteilt. Diese drei Unterschichten sind eine Leitungs-Zugriffssteuerung ("Line Access Control") (LAC) für die Steuerung des festgelegten Teilnehmer-Signalisierungsprotokolls, eine einrichtungsinterne Ablaufe steuernde Ruf-/Dienste-Steuerung (" Call/Service Control") (CSC) und eine Transportsteuerung ("Transport Control") (TRC). Durch letztere wird dabei der sogenannte Dienst-Zugriffspunkt ("Service Access Point") für Zustandsänderungen der Sicherungsschicht (Layer-2) behandelt, d.h. diese Transportsteuerung steuert die Kommunikation an der Schnittstelle der Schicht 3 (Layer-3) und der Schicht 2 (Layer-2). Als Bindeglied für diese Unterschichten dient eine Verbindungssteuerung ("Association Control") (ASC) in Form eines Signalverteilers, die in den Ruf-Behandlungsmonitor eingebettet ist.

Jede der genannten Unterschichten LAG und CSC ist durch eine Klassenhierarchie realisiert. In jeder Klasse der jeweiligen Klassenhierarchie ist die für die Teilnehmersignalisierung festgelegte rufende Teilnehmerseite und gerufene Teilnehmerseite durch wenigstens ein gesondertes Objekt repräsentiert. Die Objekte kommunizieren dabei lokal auf einer der Teilnehmerseiten direkt über quasi-asynchrone Methodenaufrufe (Methodenwarteschlange) untereinander, d.h. aus Sicht des einzelnen Objektes erfolgt die Kommunikation asynchron, die Methodenaufrufe werden jedoch sequentiell zugestellt. Mit dem jeweiligen Methodenaufruf, der in Form eines Signales mit Parametern, auf die das jeweilige Zielobjekt direkt zugreifen kann, übergeben wird, ist das jeweilige Zielobjekt durch eine physikalische Objektadresse (Speicheradresse) bezeichnet. Dagegen kommunizieren Objekte unterschiedlicher Teilnehmerseiten (rufende und gerufene Teilnehmerseite) über asynchrone interne Anreize ("Reports") miteinander, wobei das jeweilige Zielobjekt durch eine logische Objektadresse adressiert ist. Ein solcher interner Anreiz stellt dabei eine festgelegte Datenstruktur ohne Direktzugriff auf Parameter dar.

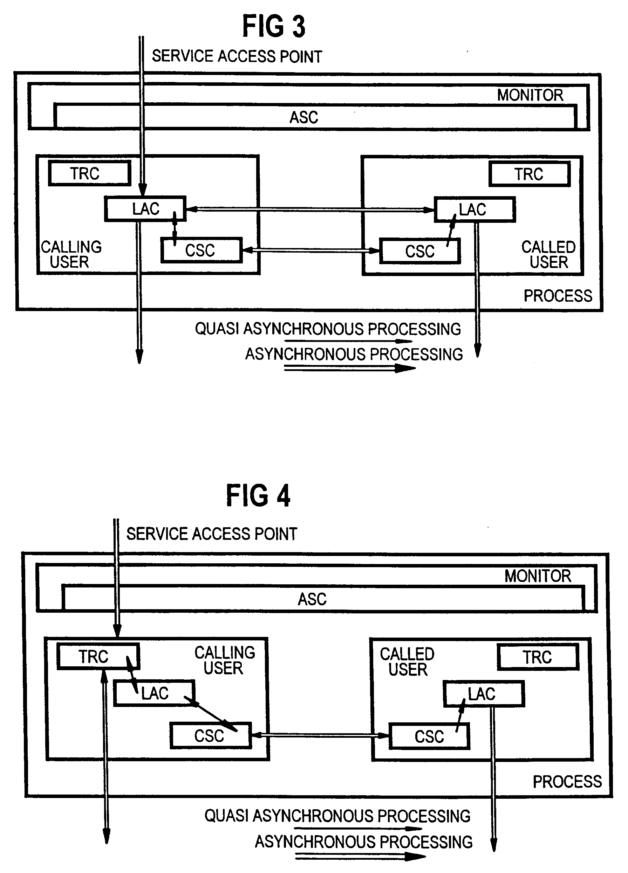

Im folgenden werden nun anhand der FIGUREN 3 und 4 auf die Kommunikationsbeziehungen der Objekte bei zwei typischen vermittlungstechnischen Abläufen erläutert.

Über einen sogenannten Dienstzugriffspunkt ("Service Access Point") wird mit einer protokollneutralen Information ("primitive") mit Schicht-3-Anteil eine Signalisierungsnachricht vom Betriebssystem der Breitband-ISDN-Kommunikationseinrichtung dem vermittlungstechnischen Prozeß zugeführt. Der Ruf-Behandlungsmonitor (FIG 1) speichert die Ereignisinformation und ermittelt den Ereignistyp. Mit Hilfe der zuvor genannten Verbindungssteuerung ASC, die in dem Ruf-Behandlungsmonitor eingebettet ist und die Abwicklung der Protokollprozedur steuert, wird die Ereignisinformation in einen internen Ereignisbezeichner umgewandelt. Dabei wandelt die Verbindungssteuerung die in der Ereignisinformation vorhandene logische Referenz in eine physikalische Objektreferenz um, adressiert so das Zielobjekt und stellt diesem die Ereignisinformation zur Bearbeitung zu. Dieses Verfahren wird für Zustandsänderungsanzeigen der Übertragungsschicht (Layer-2), für den Empfang von Signalisierungsnachrichten und für interne Anreize zwischen den beiden Teilnehmerseiten (rufende und gerufene Teilnehmerseite) eines Rufes oder für Zeitgliedablaufanzeigen angewendet.

FIG 3 zeigt eine typische Bearbeitung einer Signalisierungsnachricht (Q.2931-Message). Diese beinhaltet als logische Referenz eine sogenannte "Call-Reference". Durch Umwertung dieser logischen Referenz wird durch die Verbindungssteuerung ASC das zuständige Zielobjekt der Leitungs-Zugriffssteuerung LAC ermittelt und die Ereignisinformation diesem Zielobjekt zugeführt. Für einen neu zu bearbeitenden Ruf instanziiert die Verbindungssteuerung gegebenenfalls vorher ein neues Objekt der Leitungs-Zugriffssteuerung Diese Leitungs-Zugriffssteuerung bearbeitet dann die Ereignisinformation entsprechend dem vorgesehenen Protokoll Q.2931 mit Hilfe der in FIG 1 dargestellten Klasse "Q.2931 Message Processing". Für bestimmte protokollneutrale, interne Steuerungsvorgänge innerhalb der Kommunikationseinrichtung, wie z.B. Berechtigungsprüfungen, Wegesuche zur Ermittlung eines Zielteilnehmers, Belegung von internen Ressourcen, Verwaltung und Vergabe von virtuellen Kanalnummern für über die Kommunikationseinrichtung verlaufende virtuelle Verbindungen, Kapazitätsverwaltung der einzelnen Verbindungswege, usw., referenziert die Leitungs-Zugriffssteuerung LAC direkt über physikalische Objektadressen die Ruf-/Dienste-Steuerung CSC derselben Teilnehmerseite, d.h. es findet ein Methodenaufruf zwischen Objekten dieser beiden Steuerungen statt, wobei der jeweilige Methodenaufruf durch Parameter enthaltende Signale erfolgt, auf die das jeweilige Zielobjekt direkt zugreifen kann. Darüber hinaus werden Signalisierungsnachrichten mit Ende-zu-Ende-Signifikanz, d.h. Signalisierungsnachrichten, die für beide Teilnehmerseiten relevant sind, durch das jeweilige Objekt der Leitungs-Zugriffssteuerung LAC als interne Anreize ("Reports") an das jeweilige LAC-Partnerobjekt auf der anderen Teilnehmerseite weitergeleitet, und zwar unter logischer Adressierung des für diese Signalisierungsnachricht in Frage kommenden Zielobjektes der Leitungs-Zugriffssteuerung LAC. Diese Kommunikation erfolgt dabei gegebenenfalls vor der Abgabe einer Quittungsinformation an den für den gerade zu bearbeitenden Ruf in Frage kommenden Teilnehmer, falls eine solche Quittungsinformation innerhalb der Protokollprozedur vorgesehen ist.

Ein systeminterner notwendiger Austausch von Informationen zwischen der rufenden und der gerufenen Teilnehmerseite eines Rufes erfolgt direkt über den Austausch von internen Anreizen ("Reports") zwischen Objekten der Ruf-/Dienste-Steuerung CSC der beiden Teilnehmerseiten. Dabei kann es sich bei diesen Informationen beispielsweise um eine Anforderung bzw. Quittung für das Durchschalten einer Nutzverbindung, einer Anforderung bzw. Quittung für das Auslösen einer Nutzverbindung, einen Rufabbruch oder um Informationen bezüglich einer erforderlichen Synchronisation der Ruf-/Dienste-Steuerungen CSC der beiden Teilnehmerseiten bei Rufabbrüchen für die Freigabe logischer Ressourcen.

Zur logischen Adressierung der Objekte der Ruf-/Dienste-Steuerungen CSC ist eine sogenannte Rufidentifizierung ("Call-ID") vorgesehen. Die Zustellung von internen Anreizen ("Reports") erfolgt von einem Objekt der Ruf-/Dienste-Steuerung CSC einer der Teilnehmerseiten über die Verbindungssteuerung ASC direkt an das Zielobjekt der Ruf-/Dienste-Steuerung CSC der anderen Teilnehmerseite. Dabei wird die zunächst vorliegende logische Referenz in eine physikalische Objektreferenz umgewandelt. Somit wird der Austausch von Ende-zu-Ende-Signalisierungsnachrichten zwischen den an einem Ruf beteiligten Objekten der Leitungs-Zugriffssteuerungen LAC und der Austausch von internen Informationen zwischen Objekten der Ruf-/Dienste-Steuerungen CSC parallelisiert. Für bestimmte Situationen, beispielsweise wenn physikalische Ressourcen von einer der Ruf-/Dienste-Steuerungen freizugeben sind und diese Freigabe von der Leitungs-Zugriffssteuerung LAC der gleichen Teilnehmerseite zu einem in Frage kommenden Teilnehmer hin zu signalisieren ist, ist eine Synchronisation der Informationsflüsse zwischen Objekten der Leitungs-Zugriffssteuerungen und der Ruf-/Dienste-Steuerungen notwendig. Dafür wird in dem in Frage kommenden Objekt der jeweiligen Leitungs-Zugriffssteuerung ein Synchronisationspunkt gesetzt, der über ein zugeordnetes Objekt der Ruf-/Dienste-Steuerung derselben Teilnehmerseite erreicht werden muß.

Im übrigen besteht die Schnittstelle zwischen der Leitungs-Zugriffssteuerung LAC und der Ruf-/Dienste-Steuerung CSC einer Teilnehmerseite aus protokollunabhängigen Primitiven. Damit ist die Realisierung unterschiedlicher Protokolle oder Protokollvarianten möglich. Die Erkennung des jeweiligen Protokolls kann dabei in der Verbindungssteuerung ASC implementiert werden.

In FIG 4 ist ein Beispiel für die Bearbeitung einer am Dienstzugriffspunkt ("Service Access Point") auftretenden Information bezüglich der Zustandsänderung in der Sicherungsschicht (Layer-2) angegeben. Die Behandlung dieser Information erfolgt dabei durch die bereits zuvor erwähnte Transportsteuerung TRC (FIG 2). Da die Behandlung derartiger Informationen lediglich lokale Bedeutung hat, findet keine Kommunikation zwischen den Transportsteuerungen der beiden Teilnehmerseiten statt. Auf der jeweiligen Teilnehmerseite können jedoch Kommunikationen einerseits zwischen Objekten der Transportsteuerung TRC und der Leitungs-Zugriffssteuerung LAC und andererseits zwischen Objekten der Leitungs-Zugriffssteuerung und der Ruf-/Dienste-Steuerung CSC stattfinden. Darüber hinaus können Objekte der Ruf-/Dienste-Steuerungen CSC der beiden Teilnehmerseiten direkt miteinander kommunizieren, um beispielsweise eine von der Kommunikationseinrichtung her initiierte Rufauslosung durchzuführen, z.B. nach Ausfall der Signalisierungsverbindung zu dem jeweiligen Teilnehmer oder bei Protokollverletzungen seitens einer der Teilnehmer. Die rufende Teilnehmerseite und die gerufene Teilnehmerseite sind dabei bei einer protokollgemäßen Rufbeendigung nach Erreichen des oben erwähnten Synchronisationspunktes unabhängig voneinander.

## Patentansprüche

1. Programmgesteuerte Einrichtung, insbesondere Breitband-ISDN-Kommunikationseinrichtung, mit mindestens einem in dieser nach dem Prinzip objektorientierter Programmierung ablaufenden vermittlungstechnischen Prozeß, welcher eine Mehrzahl von objektbezogenen Strukturelementen zur Implementierung unterschiedlicher vermittlungstechnischer Funktionen aufweist, die jeweils für eine Mehrzahl von vermittlungstechnischen Vorgängen verfügbar sind, wobei von den Strukturelementen jeweils für die Realisierung festgelegter vermittlungstechnischer Funktionen Objekte instanziiert werden und die Objekte durch Methodenaufrufe miteinander kommunizieren,
**dadurch gekennzeichnet,**
daß die nach dem OSI-7-Schichtenmodell festgelegte Vermittlungsschicht (ASC, LAC, CSC, TRC) für die Teilnehmersignalisierung in eine Anzahl von Unterschichten unterteilt ist, daß jede der Unterschichten durch eine mindestens ein Strukturelement aufweisende Strukturelemente-Hierarchie realisiert ist,
daß in jedem Strukturelement der jeweiligen Strukturelemente-Hierarchie die für die Teilnehmersignalisierung festgelegte rufende Teilnehmerseite und gerufene Treilnehmerseite durch wenigstens ein gesondertes Objekt repräsentiert ist und daß Objekte ein und derselben Teilnehmerseite über quasiasynchrone Methodenaufrufe, Objekte der jeweiligen Unterschicht unterschiedlicher Teilnehmerseiten dagegen über asynchrone interne Anreize direkt miteinander kommunizieren.

2. Programmgesteuerte Einrichtung nach Anspruch 1,
**dadurch gekennzeichnet,**
daß mit dem jeweiligen Methodenaufruf das Zielobjekt durch eine physikalische Objektadresse, mit einem internen Anreiz dagegen das Zielobjekt durch eine logische Objektadresse adressiert ist.

3. Programmgesteuerte Einrichtung nach Anspruch 1 oder 2,
**dadurch gekennzeichnet,**
daß als Unterschichten der Vermittlungsschicht (ASC, LAC, CSC, TRC) eine für die Steuerung des festgelegten Teilnehmer-Signalisierungsprotokolls dienende Leitungs-Zugriffssteuerung (LAC), eine einrichtungsinterne Abläufe steuernde Ruf-/Dienste-Steuerung (CSC) eine Zustandsänderungen der Sicherungsschicht bearbeitende Transportsteuerung (TRC) sowie eine als Bindeglied der Unterschichten dienende Verbindungssteuerung (ASC) in Form eines Signalverteilers vorgesehen sind.

4. Programmgesteuerte Einrichtung nach Anspruch 3,
**dadurch gekennzeichnet,**
daß interne Anreize zwischen Objekten innerhalb der Leitungs-Zugriffssteuerung (LAC) einerseits und zwischen diesen zugeordneten Objekten innerhalb der Ruf-/Dienste-Steuerung (CSC) andererseits parallel initiiert werden.

5. Programmgesteuerte Einrichtung nach Anspruch 4,
**dadurch gekennzeichnet,**
daß durch die parallel initiierten internen Anreize hervorgerufene Informationsflüsse zwischen Objekten der Leitungs-Zugriffssteuerung (LAC) einerseits und zwischen diesen zugeordneten Objekten der Ruf-/Dienste-Steuerung (CSC) andererseits durch das den jeweiligen internen Anreiz initiierende Objekt der Leitungs-Zugriffssteuerung (LAC) synchronisiert werden

6. Programmgesteuerte Einrichtung nach einem der Ansprüche 3 bis 5,
**dadurch gekennzeichnet,**
daß Methodenaufrufe zwischen Objekten der Leitungs-Zugriffssteuerung (LAC) und der Ruf-/Dienste-Steuerung (CSC) teilnehmersignalisierungsprotokoll-neutral durchgeführt werden.
